# EUROPEAN PATENT SPECIFICATION

(11) **EP 0 886 469 B1**
(45) Date of publication and mention of the grant of the patent: **02.05.2003**
(21) Application number: 97902450.2
(22) Date of filing: 10.01.1997
(51) Int. Cl.: A01N 25/02, A01N 25/24, A01N 25/34

(54) **BACTERICIDAL COMPOSITIONS AND ARTICLES CONTAINING THEM**
BAKTERIZIDE ZUSAMMENSETZUNGEN UND DIESE ENTHALTENDE ARTIKEL
COMPOSITIONS BACTERICIDES ET ARTICLES LES CONTENANT

(30) Priority: 12.01.1996 GB 9600661
(43) Date of publication of application: 30.12.1998
(73) Proprietor: Fenchurch Environmental Group Limited, Warrington, Cheshire WA4 5LF (GB)
(72) Inventor: WOOLARD, Trevor, Poole, Dorset BH14 ORS (GB); HOLE, Tristan, Kingston Hill, Surrey KT2 7JB (GB); WOOD, Ian, Warrington, Cheshire WA1 5XS (GB)
(74) Representative: Hutchins, Michael Richard
(86) International application number: GB9700296
(87) International publication number: WO97024925

(56) References cited:
- EP-A- 0 038 416
- EP-A- 0 281 398
- EP-A- 0 364 159
- WO-A-96/29361
- FR-A- 2 342 074
- GB-A- 939 777
- GB-A- 1 348 340

## Description

The present invention relates to bactericidal compositions, articles containing them, and processes for their preparation.

A great deal of time and effort, in a wide range of technical fields is currently devoted to overcoming the problem of bacterial infection and contamination. In the office, and in the home, there are many everyday objects which are touched or handled on a regular basis by numerous people. Such items, if not cleaned properly and regularly, tend to harbour and accumulate dirt and germs and this can contribute to the spread of illness and disease. Disinfection achieved by the use of disinfectants is short-lived. Moreover, the disinfection of objects item by item is time-consuming and there is no easy way of telling whether the required standard of disinfection has been achieved.

On many occasions filters are employed to regulate the flow of air between different locations. Hitherto, such filters have had only limited success in controlling the spread of bacterial infection from one location to another.

Another field in which thorough disinfection is important, if not essential, is in the field of food processing, and a particular problem faced by the food processing industry is in keeping sterile the surfaces and materials with which food comes into contact. For example, it can be very difficult adequately to ensure that work surfaces, wall surfaces and claddings etc. are free from harmful bacteria which could cause food spoilage. Furthermore, although food packaging materials can be sterilised along with the food after packaging, it would undoubtedly be advantageous to be able to prevent bacterial contamination of the packaging materials in the first place.

Bacterial contamination can be a significant problem in the context of air-conditioning, ventilation and air filtration systems. It will readily be appreciated that if pathogenic disease-causing bacteria find their way into the air-conditioning or ventilation shafts of a building, they will rapidly be circulated throughout the building thereby greatly increasing the likelihood of the spread of infection and disease. This can be a particular problem in hospitals, for example, where the weakened or suppressed immune systems of many patients will render them much more susceptible to infection. It would therefore be highly desirable to be able to provide a means of treating air-conditioning and ventilation systems, and their component parts such as trunking, conduits and air filtration systems, with anti-bacterial agents to reduce or eliminate the spread of pathogenic bacteria.

Thus there exists a need to provide articles, objects and materials, particularly those associated with the food processing industry, and those associated with air-conditioning and ventilation of buildings, with a means of preventing bacterial contamination.

It has been known previously to provide the components of air-conditioning systems with a coating of an antifungal composition; see US 5,314,719.

It has also been known previously to provide articles with an ability to resist bacterial contamination by incorporating a bactericidal compound or composition into the matrix of the material from which the article is formed.

For example, US 4,642,267 discloses *inter alia* polyurethane films containing N-methylpyrrolidone, PVP and an antibacterial agent selected from chlorhexidine acetate, cephalosporin, ampicillin, and oxytetracyclin.

US Patent Number 5236703 discloses polymeric substrates such as rubber or latex containing povidone iodine.

International Patent Application, publication number WO 90/11015 (HYGENICO) discloses the incorporating into the matrix of the article of a combination of an organoarsenic anti-bacterial agent such as 10,10-oxybisphenoxarsine (OBPA), with an alkylated diaminoalkane anti-bacterial agent such as a 1-alkylamino-3-amino propane. However, this combination, although undoubtedly effective against a broad spectrum of both gram positive and gram negative bacteria, is not suited to use with items and articles destined to come into contact with food, and is not authorised for use in conjunction with such articles.

A further problem with the combination of bactericidal agents disclosed in WO 90/11015 is that they have been found to be incompatible with certain additives commonly used in food-grade plastics materials, particularly PVC.

The problems associated with the bactericidal agents disclosed in WO 90/11015 have been overcome to a large extent by the synergistic compositions of isothiazolinones and benzalkonium halides disclosed in our earlier co-pending Application No. PCT/GB95/01637 (WO 96 /01562). In that Application, it is disclosed that the combination of isothiazolinone and benzalkonium anti-bacterial compounds can be formulated in a non-volatile liquid carrier such as a glycol and the resulting solution applied to or incorporated into a solid substrate such as a filter or a component of an air conditioning and ventilation system. It has since become apparent through further experiments that the use of a non-volatile solvent such as a glycol offers considerable benefits in maintaining the anti-bacterial activity of the active ingredients at the surface of a solid substrate. Thus, it has been found that when no solvent, or a volatile solvent, is used when applying the anti-bacterial agents to a solid substrate, the anti-bacterial agent in the dry state exhibits only negligible or non-existent anti-bacterial activity at the solid surface. In contrast, when using a non-drying solvent such as a glycol, the surface of the solid object, although appearing dry or nearly dry to the touch, nevertheless has present thereon the anti-bacterial composition in solution form and the result is that excellent anti-bacterial activity is exhibited at the surface of the solid substrate, over a prolonged period, for example, several months.

Our earlier Application relates specifically to combinations of isothiazolinones and benzalkonium halides but we have now found that other anti-bacterial agents in non-volatile carriers such as glycol also exhibit good anti-bacterial activity when applied to solid substrates.

Accordingly, in a first aspect, the invention provides a solid article which is a filter or a component part of an air conditioning system or a component part of a ventilation system, which article is coated with or contains an anti-bacterial agent in a non-volatile glycol solvent carrier, the anti-bacterial agent being other than a combination of an isothiazolinone and a benzalkonium halide, and excluding air filters coated with an anti-bacterial composition containing both an anti-bacterial agent and a cationic surfactant.

Examples of anti-bacterial agents for use in the present invention include amphoteric compounds, iodophores, phenolic compounds, quaternary ammonium compounds, hypochlorites and nitrogen-based heterocyclic antibacterial compounds.

Examples of amphoteric compounds include long chain N-alkyl derivatives of amino acids such as glycine, alanine and beta-amino butyric acid, particular examples being dodecyl beta-alanine, dodecyl beta-aminobutyric acid, dodecylamino-di(aminoethylamino)glycine and N-(3-dodecylamino)propyl glycine.

The term iodophores as used herein refers to complexes of iodine or triiodide with a carrier, such as a neutral polymer. The carrier typically is one which increases the solubility of iodine in water, provides a sustained release of the iodine and reduces the equilibrium concentrations of free iodine. Examples of polymeric carriers from which iodophore compositions can be made include polyvinylpyrrolidone, polyether glycols such as polyethylene glycols; polyvinyl alcohols, polyacrylates, polyamides, polyoxyalkylenes, and polysaccharides. A preferred iodophore is povidone iodine, in which the carrier is polyvinylpyrrolidone.

Examples of quaternary ammonium compounds include compounds of the general formula R₁R₂N⁺R₃R₄ X⁻ wherein or one or two of the R groups are alkyl chains optionally substituted by an aryl group, or optionally interrupted by an aryl group or a heteroatom such as oxygen, and the other R groups are the same or different and are C₁-C₄ alkyl groups and in particular methyl groups. Examples of classes of quaternary ammonium compounds within this general formula include benzalkonium halides, aryl ring substituted benzalkonium halides such as ethyl-substituted benzalkonium halides (e.g. Barquat^{R} 4250 available from Lonza), and twin chain quaternary ammonium compounds such as dialkyldimethylammonium compounds wherein the two non-methyl alkyl groups are selected from medium and long chain alkyl groups such as octyl groups and didecyl groups. Examples of quaternary ammonium compounds in which an alkyl group R contains an oxygen heteroatom include domiphen bromide, benzethonium chloride and methylbenzethonium chloride.

Other examples of quaternary ammonium compounds include alkylpyridinium compounds such as cetylpyridinium chloride, and bridged cyclic amino compounds such as the hexaminium compounds, e.g. N-(3-chlorallyl)hexaminium chloride.

Examples of phenolic compounds include methyl, halo- and aryl substituted phenolic compounds such as 2-phenylphenol, 2-benzyl-4-chlorophenol, 2-cyclopentyl-4-chlorophenol, 4-t-amylphenol, 4-t-butylphenol, 4-chloro-2-pentylphenol, 6-chloro-2-pentylphenol, p-chloro-meta-xylenol, 2,4,4'-trichloro-2'-hydroxydiphenol, thymol (2-i-propyl-3-methylphenol), chlorothymol, 3-methyl-4-chlorophenol, 2,6-dichloro-4-n-alkylphenols, 2,4-dichloro-meta-xylenol, 2,4,5-trichlorophenol and 2-benzyl-4-chlorophenol.

Examples of hypochlorites include alkali-metal and alkaline earth metal hypochlorites such as lithium hypochlorite, sodium hypochlorite, potassium hypochlorite, calcium hypochlorite, and chlorinated trisodium phosphate and their various hydrates.

Other chlorine-containing or chlorine-releasing agents include chlorine dioxide and its precursors, as well as 4-sulphondichloramido benzoic acid (halazone), 1,3-dichloro-5,5-dimethylhydantoin (halane), and various chloroisocyanuric acid derivatives.

Examples of nitrogen-containing anti-bacterial agents include pyridine derivatives such as 4-pyridine carboxylic acid hydrazide, sodium 2-pyridinethiol-1-oxide (Sodium Omadine™), bis-(2-pyridylthio)zinc 1,1'-dioxide (Zinc Omadine), triazoles and imidazoles such as 2-(4-thiazolyl) benzimidazole (Metasol TK-100); 12-benzisothiazoline-3-one (Proxcel™); 2-n-octyl-4-isothiazolin-3-one (Kathon™), 2-bromo-2-nitro-1,3-propanediol (bromonopol™), 3-trifluoromethyl-4,4'-dichlorocarbanilide (Irgasan™), quinacrine HCl (Atabrine™), ciprofloxacin and nalidixic acid and its various derivatives.

The anti-bacterial compound selected will be one which is compatible with the carrier.

Particular carriers are glycols such as alkylene and polyalkylene glycols. Preferred glycols include diethylene glycol, hexylene glycol, propylene glycol and polyethylene glycol. A particularly preferred glycol is diethylene glycol.

The glycol solvent carrier may be a water soluble or water-miscible carrier but this is not essential.

The anti-bacterial compositions can be incorporated into a solid matrix, such a matrix formed from a plastics material, by blending the composition with the plastics material prior to a moulding or other thermo-forming step to form the solid article.

The solid matrix can contain between about 0.0001% by weight and 10% by weight of the bactericidal composition, typically at least 0.01% and preferably at least 0.1%, for example in the range 0.1% to 8% by weight.

Typically, the concentration of anti-bacterial agent in the solid matrix will be at least 0.001%, and more particularly at least 0.002%, for example between about 0.002% and 5% by weight.

The solid matrix can be a solid polymeric matrix formed from any natural or synthetic plastics material.

Examples of such materials include acrylonitrile-butadiene-styrene, cellulose acetate, cellulose, cellulose propionate, lignocellulose, methyl methacrylate-acrylonitrile-butadiene-styrene, methyl methacrylate-butadiene-styrene, melamine-formaldehyde, melamine-urea-formaldehyde, nitrocellulose, polyamides, acrylic and methacrylic resins, polyacrylonitrile, polybutylene terephthalate, polycarbonate, polycaprolactone, polychlorotrifluoroethylene, polyolefins such as polyethylene, polypropylene, polybutene and polyisobutylene, polyetherketone, polyethylenenaphthenate, polyethersulphone, polyether, polyethylene terephthalate, phenol-formaldehyde, polymethyl methacrylate, polyoxymethylene polyformaldehyde polyacetal, polyphenylene oxide, phenol-tesorcinol-formaldehyde, polystyrene, polyterpenes and polytetrafluoroethylene. Particular polymers include ethylenevinylacetate copolymer (EVA), polyvinylchloride (PVC), polyethylene, polypropylene, polyesters, thermoplastic rubbers such as butadiene-based block copolymers and natural rubbers.

The anti-bacterial agent will typically be chosen such that it is stable at the temperatures necessary for the thermo-forming of the plastics material. In one embodiment for example, the plastics material is thermo- formable at a temperature of 160°C or less, and a particularly preferred plastics material is ethylenevinylacetate (EVA) which can be thermo-formed by heating to 120°C.

The solid articles formed from a matrix incorporating the bactericidal compositions are filters or component parts of an air conditioning system or component parts of a ventilation system. Examples of components of air conditioning and ventilation systems include panels, tubes, conduits, grilles, air filters, and the like.

As an alternative to incorporating the anti-bacterial composition into the matrix of the solid substrate, the surface of the solid substrate can be treated, e.g. coated, with the composition. The composition can therefore be formulated in a coating composition such as a paint or varnish along with other components such as those conventionally used in paints and coating materials. The paint base may be, for example, an oil-based paint base or an emulsion paint. For application to the surface of the solid substrate, the anti-bacterial composition will generally include a co-solvent or co-diluent which evaporates leaving the anti-bacterial compositions on the solid substrate in solution form. In addition to paints or varnishes, the compositions can be incorporated into other settable or curable compositions such as fillers, grouts, adhesives, mastics and putties which solidify either relatively quickly or over a more prolonged period to give a solid matrix.

Paints incorporating the bactericidal compositions of the present invention may be used for example to treat the inner surfaces of air conduits and-pipes used in air-conditioning and ventilation systems.

In a further aspect, the invention provides articles such as panels and conduits for air-conditioning and ventilation systems, coated with a paint composition comprising the bactericidal compositions of the present invention.

In a still further aspect, the invention provides a method of treating an air-conditioning system or ventilation system in a building to provide the air-conditioning system or ventilation system with anti-bacterial properties, which method comprises coating the surfaces of ventilation shafts, conduits and pipes, and any air filters making up the system with a composition or compositions comprising a bactericidal composition as hereinbefore defined, and excluding air filters coated with an anti-bacterial composition containing both an anti-bacterial agent and a cationic surfactant.

The solid articles of the present invention, in addition to containing the bactericidal compositions, can also contain one or more other substances such as other bactericidal agents, biocidal agent, algaecidal and fungicidal agents. Such other substances typically are incorporated into the mixture prior to moulding.

An advantage of the solid articles of the present invention is that whereas it has previously been considered that disinfectants only normally work in a wet environment, and cease to work when the disinfectant dries out, the solid articles of the present invention continue to exhibit bactericidal activity when apparently in a dry state. This is believed to be because although the surface appears dry, there is actually present at the surface a low concentration of the anti-bacterial compound in solution in the non-volatile carrier. The result is that solid articles treated in accordance with the invention do not require repeated wiping down with disinfectant in order to prevent the build-up of bacteria.

The solid articles of the present invention have anti-bacterial activities against a wide range of gram positive and gram negative bacteria, such as *Bacillus cereus, Bacillus subtilis, Brevibacterium ammoniagenes, Brucella abortus, Klebsiella pneumoniae,* *Lactobacillus casei, Proteus vulgaris, Listeria monocytogenes, Pseudomonas aeruginosa, Salmonella gallinarum, Salmonella typhosa, Staphylococcus aureus, Streptococcus faecalis, Flavobacterium* species, *Bacillus* species, *Escherichia* species, *Aeromonas* species, *Achromobacter* species and *Alcaligenes* species.

The solid articles of the present invention also have activity against fungi such as *Cephalosporium* species, *Cladosporium* species, *Fusarium* species, *Paecilomyces* species, *Penicillium* species *Streptomyces* species, *Trichophyton interdigitale, Chaetorarium globesum, Aspergillus niger,* and *Ceniphora puteana,* yeasts such as *Monilia albicans* and *Saccharomyces cerevisiae,* and algae such as *Chlorella pyrenoidosa* and *Anabaena cylindrica.*

The preparation and properties of the compositions and solid articles of the present invention will now be illustrated, but not limited, by the following examples.

### EXAMPLE 1

A solution of an amphoteric anti-bacterial agent, Sandoteric™ ABD available from Sandoz, Basel, Switzerland (5 g) in diethylene glycol (100 cm³) is prepared to give a solution strength of the anti-bacterial agent of 5 % (w/v).

The resulting solution is diluted with water to a strength of 4:1 or 8:1 (water:anti-bacterial agent) to provide a solution which is then used to dip or spray a conventional polyester filter element of the type manufactured by Libeltx of Marialoopsteenweg, 51, B-8760 Mevlebeke, Belgium.

### EXAMPLE 2

The neat diethylene glycol solution of anti-bacterial agent described in Example 1 is diluted 4:1 or 8:1 (water:anti-bacterial agent) and the resulting aqueous composition was added to a conventional paint base at a concentration of 10cm³ per 100cm³ of paint. The resulting anti-bacterial paint is used to coat the conduits and grilles of an air-conditioning system.

### EXAMPLE 3

The neat diethylene glycol solution of anti-bacterial agent described in Example 1 is mixed with ethylenevinylacetate (EVA) pellets in an amount corresponding to 5% by weight of the total weight of the solution/pellet mixture in such a way as to ensure thorough coating of the pellets with the mixture. The coated pellets are then introduced into the hopper of a conventional injection moulding machine and moulded into a variety of shapes and sizes. Articles formed by this method are found to have excellent bactericidal properties, over a prolonged period, e.g. several months.

### EXAMPLE 4

A solution of cetrimide (40% alkyl trimethylammonium bromide) (5 g) in diethylene glycol (100 cm³) is prepared to give a solution strength of the anti-bacterial agent of 5% (w/v). The neat diethylene glycol solution is then diluted and used to make up dipping and spraying solutions and anti-bacterial paints in an analogous manner to Examples 1 and 2. The neat diethylene glycol solution is also used to prepare moulded anti-bacterial EVA articles as described in Example 3.

### EXAMPLE 5

An anti-bacterial composition analogous to the compositions described in Examples 1 to 4 is made up in diethylene glycol to a solution strength of 5% (w/v) from chloroxylenol.

The resulting neat diethylene glycol solution is then used in the manufacture of EVA articles, or in paint bases, or as spraying or dipping solutions, as described in Examples 1 to 3.

### EXAMPLE 6

An anti-bacterial composition analogous to the compositions described in Examples 1 to 4 is made up in hexylene glycol to a solution strength of 5% (w/v) from Keytrol^{R} T hydroxytriazine (available from Cochrane & Keane Chemicals Limited, Oldham, UK).

### EXAMPLE 7

Anti-bacterial compositions corresponding to those of Examples 1 to 4 are made up and used, except that the diethylene glycol carrier is replaced by a liquid polyethylene glycol.

### EXAMPLE 8

A 5% proprietary solution of 5-chloro-2-(2,4-dichloro-phenoxy) phenol (NM) and a 10% proprietary solution of I -alkyl amino-3 amino propane (DM 100) are formulated together with a liquid polyethylene glycol to give solution strengths of the two anti-bacterial agents of 0.005% w/v and 0.01% w/v respectively. The anti-bacterial solution is then mixed with pellets of low density polyethylene (40 cm³ per kilogram of polyethylene) and a proprietary heat stabiliser (ICI PE-AD51) added. The resulting mixture is processed at 165°C in a standard injection moulding machine to give, after cooling, a polymer composition which has excellent anti-bacterial properties.

### EXAMPLE 9

A mixture of 5-chloro-2-(2,4-dichlorophenoxy) phenol (NM), 1-alkylamino-3 amino propane (DM 100) and a blend of 5-chloro-2-methyl-4-isothiazolin-3-one and 2-methyl-4-isothiazolin-3-one (LV524) is formulated with a liquid polyethylene glycol to give solution strengths of 0.001% w/v NM, 0.002% w/v DM100 and 0.003% w/v LV524.

The mixture is then formulated with low density polyethylene (LDPE) pellets in a ratio of 40cm³ anti-bacterial solution per kilogram of LDPE, and a proprietary heat stabiliser (ICI PE-AD51) added. The resulting mixture is then processed in an injection moulding machine as described in Example 8 to give a polymer matrix which has excellent anti-bacterial activity.

## Claims

1. A solid article which is a filter or a component part of an air conditioning system or a component part of a ventilation system, which article is coated with or contains an anti-bacterial agent in a non-volatile glycol solvent carrier, the anti-bacterial agent being other than a combination of an isothiazolinone and a benzalkonium halide, and excluding air filters coated with an anti-bacterial composition containing both an anti-bacterial agent and a cationic surfactant.

2. A solid article according to claim 1 **characterised in that** the anti-bacterial agent is selected from amphoteric compounds, iodophores, phenolic compounds, quaternary ammonium compounds, hypochlorites and nitrogen-based heterocyclic anti-bacterial compounds.

3. A solid article according to either claim I or claim 2 **characterised in that** the glycol solvent carrier is selected from alkylene and polyalkylene glycols.

4. A solid article according to claim 3 **characterised in that** the glycol solvent carrier is selected from diethylene glycol, hexylene glycol, propylene glycol and polyethylene glycol.

5. A solid article according to claim 4 **characterised in that** the glycol solvent carrier is diethylene glycol.

6. A solid article according to any one of the preceding claims **characterised in that** the glycol solvent carrier is water soluble or water-miscible.

7. A solid article according to any one of the preceding claims which is a solid matrix formed from a plastics material having the anti-bacterial composition incorporated therein.

8. A solid article according to claim 7 **characterised in that** the solid matrix contains between 0.0001% and 10% of the bactericidal composition.

9. A solid article according to either claim 7 or claim 8 **characterised in that** the solid matrix contains at least 0.001% by weight of the anti-bacterial agent.

10. A solid article according to any one of claims 7 to 9 **characterised in that** the solid matrix is formed from a polymer selected from acrylonitrile-butadiene-styrene, cellulose acetate, cellulose, cellulose propionate, lignocellulose, methyl methacrylate-acrylonitrile-butadiene-styrene, methyl methacrylate-butadiene-styrene, melamine-formaldehyde, melamine-urea-formaldehyde, nitrocellulose, polyamides, acrylic and methacrylic resins, polyacrylonitrile, polybutylene terephthalate, polycarbonate, polycaprolactone, polychlorotrifluoroethylene, polyolefins such as polyethylene, polypropylene, polybutene and polyisobutylene, polyetherketone, polyethylenenaphthenate, polyethersulphone, polyether, polyethylene terephthalate, phenol-formaldehyde, polymethyl methacrylate, polyoxymethylene polyformaldehyde polyacetal, polyphenylene oxide, phenol-resorcinol-formaldehyde, polystyrene, polyterpenes and polytetrafluoroethylene.

11. A solid article according to claim 10 **characterised in that** the solid matrix is formed from a polymer selected from ethylenevinylacetate copolymer (EVA), polyvinylchloride (PVC), polyethylene, polypropylene, polyesters, thermoplastic rubbers such as butadiene-based block copolymers, and natural rubbers.

12. A solid article according to claim 10 or claim 11 **characterised in that** the plastics material is thermo-formable at a temperature of 160°C or less.

13. A solid article according to claim 12 **characterised in that** the matrix is formed from ethylenevinylacetate (EVA).

14. A solid article according to any one of the preceding claims **characterised in that** the component part for an air conditioning and a ventilation system is selected from panels, tubes, conduits, grilles and air filters.

15. A solid article according to any one of claims 1 to 6 **characterised in that** the surface of the solid article has been treated (e.g. coated) with the anti-bacterial composition applied as a paint or varnish.

16. A method of treating an air-conditioning system or ventilation system in a building to provide the air-conditioning system or ventilation system with anti-bacterial properties, which method comprises coating the surfaces of ventilation shafts, conduits and pipes, and any air filters making up the system with the anti-bacterial composition as defined in any one of claims 1 to 6, and excluding air filters coated with an anti-bacterial composition containing both an anti-bacterial agent and a cationic surfactant.

## Patentansprüche

1. Fester Artikel, der ein Filter oder ein Bestandteil eines Klimatisierungssystems oder ein Bestandteil eines Belüftungssystems ist, wobei der Artikel mit einem antibakteriellen Mittel in einem nicht-flüchtigem Glykol-Lösungsmittelträger beschichtet ist oder diesen enthält, wobei das antibakterielle Mittel ein anderes als eine Kombination eine Isothiazolinons und eines Benzalkoniumhalids oder eine Kombination eines arsenorganischen antibakteriellen Mittels und eines antibakteriellen alkylierten Diaminoalkan-Mittels ist, und unter Ausschluss von Luftfiltern, die mit einer antibakteriellen Zusammensetzung beschichtet sind, die sowohl ein antibakterielles Mittel als auch ein kationisches oberflächenaktives Mittel enthält.

2. Fester Artikel nach Anspruch 1, **dadurch gekennzeichnet, dass** das antibakterielle Mittel aus amphoterischen Verbindungen, lodophoren, phenolischen Verbindungen, quaternären Ammonium-Verbindungen, Hypochloriten und stickstoffbasierten heterozyklischen antibakteriellen Verbindungen ausgewählt ist.

3. Fester Artikel nach Anspruch 1 oder 2, **dadurch gekennzeichnet, dass** der Glykol-Lösungsmittelträger aus Alkylen und Polyalkylen-Glykolen ausgewählt ist.

4. Fester Artikel nach Anspruch 3, **dadurch gekennzeichnet, dass** der Glykol-Lösungsmittelträger aus Diethylenglykol, Hexylenglykol, Propylenglykol und Polyethylenglykol ausgewählt ist.

5. Fester Artikel nach Anspruch 4, **dadurch gekennzeichnet, dass** der Glykol-Lösungsmittelträger Diethylenglykol ist.

6. Fester Artikel nach einem der vorhergehenden Ansprüche, **dadurch gekennzeichnet, dass** der Glykol-Lösungsmittelträger wasserlöslich oder wassermischbar ist.

7. Fester Artikel nach einem der vorhergehenden Ansprüche, der eine feste Matrix ist, die aus einem Kunststoffmaterial gebildet ist und in die die antibakterielle Verbindung eingefügt ist.

8. Fester Artikel nach Anspruch 7, **dadurch gekennzeichnet, dass** die feste Matrix zwischen 0,0001% und 10% der bakteriziden Verbindung enthält.

9. Fester Artikel nach Anspruch 7 oder 8, **dadurch gekennzeichnet, dass** die feste Matrix zumindest 0,001% Gewichtsprozente des antibakteriellen Mittels enthält.

10. Fester Artikel nach einem der Ansprüche 7 bis 9, **dadurch gekennzeichnet, dass** die feste Matrix aus einem Polymer gebildet ist, der aus Akrylnitril-Butadien-Styren, Zelluloseacetat, Zellulose, Zellulosepropionat, Lignozellulose, Methylmethacrylat-Akrylnitril-Butadiene-Styren, Methylmethacrylat-Butadien-Styren, Melamin-Formaldehyd, Melamin-Harnstoff-Formaldehyd, Nitrozellulose, Polyamiden, Acryl- und Metacryl-Harzen, Polyacrylnitril, Polybuthylen-Terephthalat, Polycarbonat, Polycaprolacton, Polychlortrifluoroethylen, Polyolefinen, wie zum Beispiel Polyethylen, Polypropylen, Polybuten und Polyisobutylen, Polyetherketon, Polyethylennaphtenat, Polyethersulfon, Polyether, Polyethylenterephthaalat, Phenol-Formaldehyd, Polymehtylmethacrylat, Polyoxymethylen-Polyformaldehyd-Polyacetal, Polyphenylenoxyd, Phenolresorzin-Formaldehyd, Polysterol, Polyterpenen und Polytetrafluorethylen ausgewählt ist.

11. Fester Artikel nach Anspruch 10, **dadurch gekennzeichnet, dass** die feste Matrix aus einem Polymer gebildet ist, der aus Ethylenvenylacetat-Copolymer (EVA) Polyvinylchlorid (PVC), Polyethylen, Polypropylen, Polyestern, thermoplastischem Gummi, wie zum Beispiel Blockpolymeren auf Butadien-Basis und Naturgummi ausgewählt ist.

12. Fester Artikel nach Anspruch 10 oder 11, **dadurch gekennzeichnet, dass** das Kunststoffmaterial bei einer Temperatur von 160° C oder weniger wärmeformbar ist.

13. Fester Artikel nach Anspruch 12, **dadurch gekennzeichnet, dass** die Matrix aus Ethylenvinylacetat (EVA) gebildet ist.

14. Fester Artikel nach einem der vorhergehenden Ansprüche, **dadurch gekennzeichnet, dass** der Bestandteil für ein Klimatisierungs- und ein Belüftungssystem aus Platten, Rohren, Leitungen, Gittern und Luftfiltern ausgewählt ist.

15. Fester Artikel nach einem der Ansprüche 1 bis 6, **dadurch gekennzeichnet, dass** die Oberfläche des festen Artikels mit der antibakteriellen Zusammensetzung behandelt (beispielsweise Beschichtet) wurde, die als eine Farbe oder ein Lack aufgebracht wurde.

16. Verfahren zur Behandlung eines Klimatisierungssystems oder Belüftungssystems in einem Gebäude, um dem Klimatisierungssystem oder Belüftungssystem antibakterielle Eigenschaften zu erteilen, wobei das Verfahren die Beschichtung der Oberfläche der Belüftungsschächte, Leitungen und Rohre und irgendwelcher Luftfilter, die das System bilden mit der antibakteriellen Zusammensetzung nach einem der Ansprüche 1 bis 6 umfasst, unter Ausschluss von Luftfiltern, die mit einer antibakteriellen Zusammensetzung beschichtet sind, die sowohl ein antibakterielles Mittel als auch ein kationisches oberflächenaktives Mittel enthält.

## Revendications

1. Un article solide qui est un filtre ou un élément composant d'un système à air conditionné ou un élément composant d'un système de ventilation, lequel article est enduit par ou contient un agent antibactérien dans un solvant véhicule non-volatil de glycol, l'agent antibactérien étant autre qu'une combinaison d'une isothiazolinone et d'un halogénure de benzalkonium, ou une combinaison d'un agent antibactérien organoarsénique et d'un agent antibactérien de diaminoalkane alkylé, et excluant les filtres à air enduits d'une composition antibactérienne contenant à la fois un agent antibactérien et un agent tensio-actif cationique.

2. Un article solide selon la revendication 1 **caractérisé en ce que** l'agent antibactérien est choisi dans le groupe des composés amphotères, iodophores, des composés phénoliques, des composés d'ammonium quaternaire, des hypochlorites et des composés antibactériens hétérocycliques à base d'azote.

3. Un article solide selon soit la revendication 1 soit la revendication 2 **caractérisé en ce que** le véhicule solvant de glycol est choisi parmi les glycols d'alkylène et les polyalkylèneglycols.

4. Un article solide selon la revendication 3 **caractérisé en ce que** le véhicule solvant de glycol est choisi parmi le diéthylène glycol, l'hexylène glycol, le propylène glycol et le polyéthylène glycol.

5. Un article solide selon la revendication 3 **caractérisé en ce que** le véhicule solvant de glycol est le diéthylène glycol.

6. Un article solide selon l'une quelconque des revendications précédentes **caractérisé en ce que** le véhicule solvant de glycol est soluble dans l'eau ou miscible dans l'eau.

7. Un article solide selon l'une quelconque des revendications précédentes qui est une matrice solide formée à partir de matières plastiques comportant incorporée dans celles-ci, une composition antibactérienne.

8. Un article solide selon la revendication 7 **caractérisé en ce que** la matrice solide contient entre 0,0001% et 10% de la composition bactéricide.

9. Un article solide selon soit la revendication 7 soit la revendication 8 **caractérisé en ce que** la matrice solide contient au moins 0,001% en poids d'un agent antibactérien.

10. Un article solide selon l'une quelconque des revendications 7 à 9 **caractérisé en ce que** la matrice solide est formée à partir d'un polymère choisi parmi acrylonitrile-butadiène-styrène, acétate de cellulose, cellulose, propionate de cellulose, lignocellulose, méthacrylate de méthyl-acrylonitrile-butadiène-styrène, méthacrylate de méthyle-butadiène-styrène, mélamine-formaldéhyde, mélamine-urée-formaldéhyde, nitrocellulose, polyamides, résines acryliques et méthacryliques, polyacrylonitrile, polybutylène térephtalate, polycarbonates, polycaprolactones, polychlorotrifluoroéthylène, polyoléfines telles que le polyéthylène, polypropylène, polybutène et le polyisobutylène, polyéthercétone, polyéthylène naphténate, polyéthersulphones, polyéthers, polyéthylène térephtalate, phénol-formaldéhyde, polyméthyl-méthacrylate, polyoxyméthylène-polyformaldéhyde-polyacétal, polyphénylène oxyde, phénol-résorcinol-formaldéhyde, polystyrène, polyterpènes et polytétrafluoroéthylènes.

11. Un article solide selon la revendication 10 **caractérisé en ce que** la matrice solide est formée à partir d'un polymère choisi parmi le copolymère éthylène-acétate de vinyle (EVA), chlorure de polyvinyle (PVC), polyéthylènes, polypropylènes, polyesters, caoutchoucs thermopolastiques telle que les copolymères blocs à base de butadiène et les caoutchoucs naturels.

12. Un article solide selon la revendication 10 ou la revendication 11 **caractérisé en ce que** les matières plastiques sont thermoformables à une température de 160°C ou moins.

13. Un article solide selon la revendication 10 **caractérisé en ce que** la matrice est formée à partir d'éthylène-acétate de vinyle (EVA).

14. Un article solide selon l'une quelconque des revendications précédentes **caractérisé en ce que** l'élément composant pour le système à air conditionné ou de ventilation est choisi parmi des panneaux, des tubes, des conduits, des grilles et des filtres à air.

15. Un article solide selon l'une quelconque des revendications 1 à 6 **caractérisé en ce que** la surface de l'article solide a été traitée (p.ex. enduite) d'une composition antibactérienne appliquée sous forme de peinture ou de vernis.

16. Méthode pour traiter un système à air conditionné ou un système de ventilation dans un building pour créer un système à air conditionné ou un système de ventilation ayant des propriétés antibactériennes, lequel procédé comprend l'enduction des surfaces des arbres du ventilateur, des conduits et des tubes, et de tout filtre à air constituant le système, d'une composition antibactérienne telle que définie dans l'une quelconque des revendications 1 à 6, et excluant les filtres à air enduits d'une composition antibactérienne contenant à la fois l'agent antibactérien et un agent tensio-actif cationique.
